# EUROPEAN PATENT SPECIFICATION

(11) **EP 2 112 800 B1**
(45) Date of publication and mention of the grant of the patent: **27.12.2017**
(21) Application number: 08155202.8
(22) Date of filing: 25.04.2008
(51) Int. Cl.: H04L 29/06, H04L 12/22

(54) **Method and system for enhanced recognition of attacks to computer systems**
Verfahren und System zur besseren Erkennung von Computersystemangriffen
Procédé et système pour une reconnaissance améliorée des attaques sur des systèmes informatiques

(43) Date of publication of application: 28.10.2009
(73) Proprietor: Deutsche Telekom AG, 53113 Bonn (DE)
(72) Inventor: Roshandel, Mehran, 13591 Berlin (DE); Hauck, Christian, 66386 St. Ingbert (DE); Feld, Michael, 66440 Blieskastel (DE)
(74) Representative: Vossius & Partner Patentanwälte Rechtsanwälte mbB

(56) References cited:
- US-A1- 2004 250 124
- US-A1- 2006 206 935
- US-A1- 2007 289 013

## Description

### Field of the Invention

The invention generally relates to mitigation of Distributed Denial of Service (DDoS) attacks on public available Internet services. Examples of such services include websites, Internet telephony (VoIP), FTP server, DNS, etc. In particular, the invention relates to an auto adaptive method and apparatus to enhance the reliability of the recognition of potential attacks.

### Background of the Invention

For many companies the internet accessibility has become very important such that even a short interrupt of their internet services may cause tremendous financial losses. With the growth of the internet, however, the threat of Distributed Denial of Service attacks (DDoS), which aim to interrupt the accessibility of specific web pages, has increased. Large scaled networks of infected PCs (bots or zombies) combine their bandwidth and computational power in order to overload a publicly available service and deny it for legal users. All public servers are basically vulnerable to DDoS attacks due to the open structure of the Internet. The bots are usually acquired automatically by hackers who use software tools to scan through the network, detecting vulnerabilities and exploiting the target machine.

The number of such DDoS incidents is steadily increasing. For example, the attacks against large e-commerce sites in February 2000 and the attacks against root DNS servers in 2003 and 2007 have drawn public attention to the problem of DDoS attacks. Today, mainly mid-sized websites are attacked by criminals in order to extort protection money from their owners without attracting too much public attention. Besides that, also Internet Service Providers (ISP) have to deal with the problem that DDoS traffic is congesting their link bandwidths.

One approach against DDoS attacks is to check the traffic for patterns of known attacks, e.g. by use of predetermined rules. Due to the fixed rules, however, such an approach is not capable of identifying and mitigating new attacks and modified types of attacks or a manual adaptation of the rules is necessary.

Many of the currently available solutions for the defense of DDoS attacks consist of a firewall with a stateful packet inspection and a set of signature based recognition methods, working with fixed parameters and threshold values. As an example, all protocols may be blocked for a predetermined time in case of an attack. A more complex version comprises an expert component with sensors for monitoring the data traffic. Based on the measured values specific defense rules are activated, e.g. filtering or specific IP-addresses. Some products can automatically adjust predefined parameters for basic adaptivity, yet they are crafted to only detect specific attacks.

Thus, today, there is a strong need to mitigate DDoS attacks on a flexible basis, i.e. not with fixed predetermined defense rules, to limit the destabilizing effect of these attacks on the server through identifying malicious requests.

US 2006/206935 discloses an apparatus and method for adaptively preventing attacks. The approach described in this document relies on the detection of the type of network traffic. Furthermore, a judging filter in the form of black/white/graylist is needed. US 2004/250124 relates to dynamic network protection and focuses on the application of particular fuzzy logic algorithms to evaluate sensor data. Moreover, it describes strict real-time requirements, i.e. all attack traffic is analyzed before it is forwarded. US 2007/289013 describes a method and a system for anomaly detection using a collective set of unsupervised machine-learning algorithms. This method relies on human intervention. Otherwise, i.e. when running without human interaction, the method is likely to generate a large number of false alarms because there is no mechanism for confirming that an abnormal behavior is really an attack except for manual filtering. In general, there is still a large amount of manual overhead involved.- such as creating correlation rules, for the system to be effective. Furthermore, it requires a connection management to be present which makes the Intrusion Detection System itself more vulnerable to DDoS attacks.

### Summary of the Invention

The invention is specified in the claims.

The invention is based on the idea to provide an auto adaptive recognition of attacks to a computer system over a network to which the computer system is connected. According to the invention known types of attacks, modifications of known types of attacks as well as unknown attacks may be recognized and blocked. A multi-level recognition method/system indicates an attack in a first step and conducts a detailed analysis in a following step. One outcome of the detailed analysis, i.e. whether the indication in the first step was correct or not or to what extent, is utilized to adapt the indication in the first step. The rules applied in the first step indication and improved by the detailed analysis may be transferred to a blocking means such as a firewall.

According to a first aspect, the invention provides a method for recognizing attacks to a computer system over a network to which the computer system is connected. In a first step, the data traffic to the computer system is monitored and one or more attack indicators are generated. These attack indicators indicate a potential attack. One attack indicator or a combination of attack indicators may suffice to trigger a more detailed analysis of the data traffic. In this analysis, i.a., the presence of an attack is determined. The generation of the one or more attack indicators is modified based on the outcome of the analysis. In particular, new experts, generating new attack indicators, are created and existing experts are modified in order to improve their reliability of the generation of the attack indicators. Due to this feedback the method/system according to the invention is auto adaptive.

The invention may further comprise one or more sensors for monitoring the data traffic. A sensor provides an indicator value, preferably comprising statistical data from the data traffic which may serve as a basis to identify an attack. Preferably, a sensor collects statistical information about received data packets over a predetermined time interval. The values obtained by the sensors, also called the sensor data vector, may be handed over to one or more experts, preferably in certain time intervals, to indicate a degree of anomaly. An expert is a tool, e.g. realized by software, which is aware of signatures and/or parameters and/or attributes relating to a known type of attack and provides an output signal, e.g. a confidence value, indicating a specific attack. Depending on a confidence vector, i.e. the list of confidence values from all experts, an analysis of the data traffic to the computer system may be initiated. It is noted that the data vector from the one or more sensors already may serve as an indicator for anomalies in the data traffic, i.e. an attack indicator, and trigger an analysis. In case of a new, i.e., unknown attack none of the existing experts provides a confidence value indicating an attack, and a detected anomaly in the data vector, e.g. indicating an abnormal increase of SYN-packets, can initiate an analysis. In the end of the analysis a new expert for indicating the respective attack in the future is generated.

The analysis of the data traffic to the computer system may comprise the identification of data packets relating to an attack. This identification is preferably based on data obtained during the monitoring, more preferably provided by said sensors. In case it is determined that a predetermined part of the data traffic to the computer system does not relate to an attack it may be determined that no attack is present. Otherwise, attributes characterizing the data packets relating to an attack can be obtained, e.g. by a characterizer, for setting up filtering rules. These filtering rules may be simulated on the data traffic and sensors may be employed to determine a further data vector. The data vector obtained during the monitoring and the further data vector can be compared, wherein if there is no difference between the data vectors there is no attack or the attributes of the packets relating to the attack are not sufficient. Preferably, the analysis may be applied in an iterative manner to improve the attributes of the packets relating to the attack, e.g. assume attributes, apply the attributes, test whether the malicious packets are blocked, assume new/modified attributes, etc. In case a difference between the data vector and the further data vector is detected an attack has been blocked successfully. The generation of the attack indicators is modified/adapted to improve the reliability of the one or more attack indicators. Preferably, existing experts are modified and/or new experts are generated.

### Brief Description of the Drawing

A preferred embodiment of the invention is described in more detail below with reference to the attached drawing, which is by way of example only.

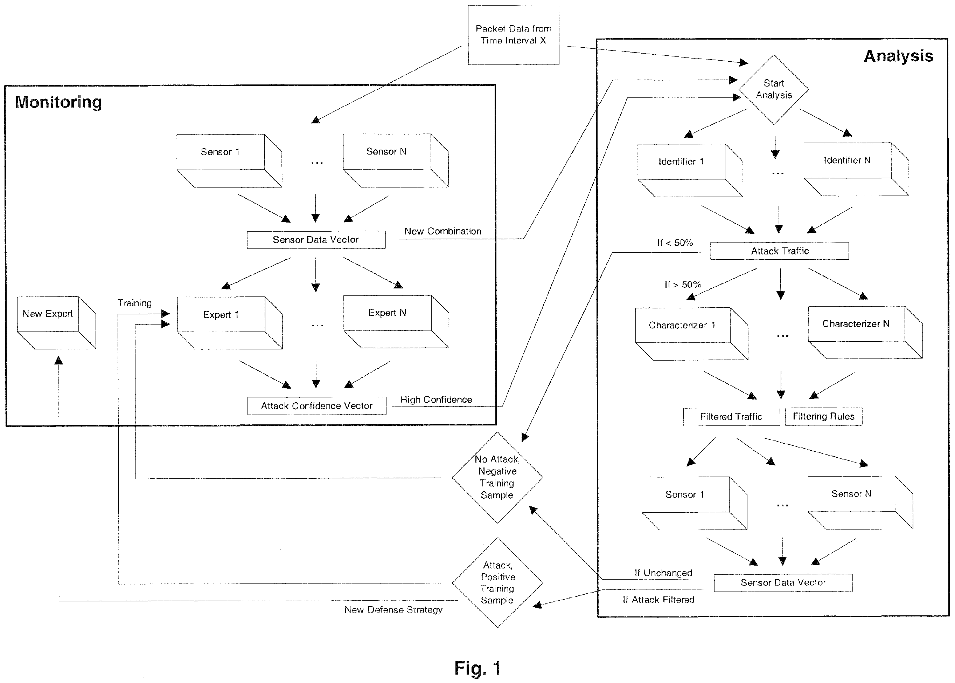

Fig. 1 shows a data flow diagram according to a preferred embodiment of the invention.

### Detailed Description

Fig. 1 shows a data flow diagram according to a preferred embodiment of the invention. In a first step the data traffic to the computer system is monitored for anomalies. Preferably one or more sensors provide information about the data traffic over a certain time interval, preferably statistical information. The values of all sensors can be transmitted to the respective experts in predetermined time intervals. Experts comprise signatures and/or attributes and/or parameters relating to characteristics of known attacks, e.g. a certain IP address or a high number of SYN-packets. The experts provide an output signal, e.g. a confidence vector, indicating the potential presence of an attack. The invention aims to automatically adapt the indication of the potential presence of an attack, e.g. the experts, in that the outcome of a following analysis is used to modify the generation of a first indication. If there is a new attack for which no expert exists, i.e. none of the experts indicates the attack, anomalies in the traffic as detected by the one or more sensors may trigger an analysis and a new expert will be generated, which in future will indicate the respective attack.

In the analysis it is determined whether analyzed samples of the data traffic to the computer system contain data packets relating to an attack and corresponding defense/blocking strategies are determined, preferably on the basis of the data provided by said sensors. A defense strategy is preferably obtained by identifying the packets relating to the attack in the data traffic and by determining characteristics, e.g. attributes and/or parameters, of the attack packets. An identifier is preferably capable of identifying each single packet in the data traffic. The identifier preferably determines that the potential attack is no attack if less than a predetermined amount of the analyzed data traffic are data packets relating to a potential attack, wherein the predetermined amount is in the range of 20% to 80%, preferably 30% to 70%, more preferably 40% to 60% and most preferably 50%.

In case of a known attack there is a corresponding defense strategy, which is applicable. If there is a new attack, identifiers are searched which cover most of the attack packets, e.g. more than 50%. This is usually the case in DDoS attacks. For each identifier one or more characterizer with respective filtering rules are obtained which block as less packets as possible, however, enough to reduce the traffic such that the sensors which have indicated the attack do not indicate this attack again in a following simulation of the filtering rules. In such a case the defense strategy is successful. In case the defense strategy is identical to a known defense strategy, a new sensor configuration for a known attack was recognized. Otherwise, a new attack is determined which will be stored as a new expert comprising the respective defense strategy.

As already indicated, the stored filtering rules may be applied to samples of the data traffic, e.g. stored data traffic, to simulate its effect on the traffic. In case the attack is successfully blocked with the respective filtering rules, a positive training sample regarding the current sensor combination is communicated to the expert. Otherwise, in case the same attack is indicated after the application of a defense strategy a false alarm was indicated and a negative training sample is communicated to the respective expert.

Every time a defense strategy was successfully applied, i.e. the attack traffic was reduced in the traffic sample, the respective filtering rules for the packets, e.g. IP-packets, may be implemented in a blocking means, e.g. a programmable firewall. This is preferably accomplished automatically.

### Example on the basis of a SYN-flood

In a TCP-SYN-flood attack (SYN-flood) the resources of a target computer system are overloaded by the establishment of a plurality of parallel connections, which do not transmit user data. This is due to a shortfall of the TCP-protocol, which allows the connections to remain in an intermediate state. In all packets relating to the SYN-flood only the TCP-Flag "SYN" in the header is set, indicating the request for an establishment of a connection. The interested reader is referred to "TCP SYN Flooding Defense", to L. Ricciulli, P. Lincon, P. Kakkar; Proceedings of CNDS, 1999.

The exemplary system comprises a sensor for sensing an abnormal increase of packets with a set SYN-flag, e.g. utilizing a CuSum-algorithm; an identifier, identifying TCP-packets with a set SYN-flag; a rule, which is assigned to the sensor by the identifier; a characterizer searching for the source IP-addresses sending the majority of the attack packets.

In the present example there is not yet an expert for a SYN-flood attack.

In case of normal data traffic to the computer system, the sensor does not detect an anomaly. Otherwise, i.e. in case an anomaly is detected, the identifier will be applied in the analyzing step. In an SYN-flood attack the number of SYN-packets, i.e. packets where only the SYN-flag is set, increases rapidly and the sensor will detect an anomaly. Then, the identifier will detect that the SYN-packets exceed a predetermined threshold value. In a DoS-attack usually 90% or more of the traffic relates to the attack. Characterizers are applied until the attack traffic is blocked. In particular, the characterizer generates filtering rules for blocking the sender of the malicious SYN-packets. Normal users not forming part of the SYN-flood attack only send few SYN-packets and are ignored by the clustering-algorithm of the characterizer. A combination of the identifier and the characterizer represent a defense strategy against a new attack which will be stored and an expert for this attack with an initial positive training sample will be generated. The respective filtering rules are transmitted to a firewall. In following SYN-attacks the confidence vector provided by the respective expert will be sufficient such that the new defense strategy will be applied as a first measure. New filtering rules may substitute existing rules to adapt the system to the new attack traffic.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. Method for recognizing attacks to a computer system over a network to which the computer system is connected, the method comprising the steps of:
(a) monitoring the data traffic to the computer system and generating one or more attack indicators, indicating a potential attack, wherein the monitoring step further comprises the step of generating a data vector from the data traffic to the computer system, the data vector being indicative of anomalies in the data traffic and comprising statistical data, wherein the monitoring step further comprises the step of generating at least one confidence vector by a respective expert means, the confidence vector indicating the probability of each known attack, and wherein the confidence vector is generated based on the data vector;
(b) analyzing the data traffic based on said one or more attack indicators and determining the presence of an attack, wherein the step of analyzing the data traffic further comprises the step of identifying data packets in the data traffic relating to a potential attack;
(c) modifying the generation of the one or more attack indicators based on the outcome of the analyzing step to improve the reliability of the one or more attack indicators,
the method further comprising the step of determining that the potential attack is no attack if less than a predetermined amount of the analyzed data traffic are data packets relating to a potential attack, wherein the predetermined amount is in the range of 50%;
wherein the attributes of a respective expert means are varied in case of a known attack or no attack is present; and wherein a new expert means is generated in case of a new attack.

2. Method according to claim 1, the expert means comprising attributes of data packets relating to a potential attack.

3. Method according to claim 1 or 2, wherein the one or more attack indicators relate to at least one of the anomalies in the data vector and at least one confidence vector.

4. Method according to any of the preceding claims, wherein the analyzing step further comprises the step of generating filtering rules for filtering data packets relating to a potential attack and filtering the data traffic based on said filtering rules.

5. Method according to claim 4, wherein the step of generating filtering rules comprises the step of obtaining one or more attributes characterizing the packets relating to a potential attack.

6. Method according to claims 4 or 5, further comprising the steps of generating a further data vector; comparing the further data vector with the data vector; and determining the presence of an attack based on said comparison.

7. Method according to claim 6, wherein the step of determining the presence of an attack determines the presence of an attack if the further data vector differs from the data vector, in that attributes relating to a potential attack are not present in the further data vector.

8. Method according to any of the preceding claims, further comprising the step of transferring attributes relating to attack packets to a blocking-means, preferably a programmable firewall.

9. System for recognizing attacks to a computer system over a network to which the computer system is connected, the system comprising:
means for monitoring the data traffic to the computer system and for generating one or more attack indicators, indicating a potential attack, for generating a data vector from the data traffic to the computer system, the data vector being indicative of anomalies in the data traffic and comprising statistical data, and for generating at least one confidence vector by a respective expert means, the confidence vector indicating the probability of each known attack, wherein the confidence vector is generated based on the data vector;
means for analyzing the data traffic based on said one or more attack indicators and for determining the presence of an attack, and further for identifying data packets in the data traffic relating to a potential attack;
means for modifying the generation of the one or more attack indicators based on the outcome of the analysis to improve the reliability of the one or more attack indicators;
means for determining that the potential attack is no attack if less than a predetermined amount of the analyzed data traffic are data packets relating to a potential attack, wherein the predetermined amount is in the range of 50%;
wherein the attributes of a respective expert means are varied in case of a known attack or no attack is present; and wherein a new expert means is generated in case of a new attack.

## Patentansprüche

1. Verfahren zum Erkennen von Angriffen auf ein Computersystem über ein Netzwerk, mit dem das Computersystem verbunden ist, wobei das Verfahren die Schritte aufweist:
(a) Überwachen des Datenverkehrs zum Computersystem und Erzeugen eines oder mehrerer Angriffsindikatoren, die einen möglichen Angriff anzeigen, wobei der Überwachungsschritt ferner den Schritt zum Erzeugen eines Datenvektors vom Datenverkehr zum Computersystem aufweist, wobei der Datenvektor Anomalien im Datenverkehr anzeigt und statistische Daten aufweist, wobei der Überwachungsschritt ferner den Schritt zum Erzeugen mindestens eines Vertrauensvektors durch eine entsprechende Experteneinrichtung aufweist, wobei der Vertrauensvektor die Wahrscheinlichkeit für jeden bekannten Angriff anzeigt, und wobei der Vertrauensvektor basierend auf dem Datenvektor erzeugt wird;
(b) Analysieren des Datenverkehrs basierend auf dem einen oder den mehreren Angriffsindikatoren und Bestimmen des Vorliegens eines Angriffs, wobei der Schritt zum Analysieren des Datenverkehrs ferner den Schritt zum Identifizieren von Datenpaketen im Datenverkehr aufweist, die mit einem möglichen Angriff in Beziehung stehen;
(c) Modifizieren der Erzeugung des einen oder der mehreren Angriffsindikatoren basierend auf dem Ergebnis des Analyseschritts, um die Zuverlässigkeit des einen oder der mehreren Angriffsindikatoren zu verbessern,
wobei das Verfahren ferner den Schritt aufweist: Bestimmen, dass der mögliche Angriff kein Angriff ist, wenn weniger als eine vorgegebene Menge des analysierten Datenverkehrs Datenpakete sind, die mit einem möglichen Angriff in Beziehung stehen, wobei die vorgegebene Menge im Bereich von 50% liegt,
wobei die Attribute einer jeweiligen Experteneinrichtung im Falle eines bekannten Angriffs oder wenn kein Angriff vorliegt verändert werden, und wobei im Falle eines neuen Angriffs eine neue Experteneinrichtung erzeugt wird.

2. Verfahren nach Anspruch 1, wobei die Experteneinrichtung Attribute von Datenpaketen aufweist, die mit einem möglichen Angriff in Beziehung stehen.

3. Verfahren nach Anspruch 1 oder 2, wobei der eine oder die mehreren Angriffsindikatoren mit mindestens einer der Anomalien im Datenvektor und mindestens einem Vertrauensvektor in Beziehung stehen.

4. Verfahren nach einem der vorangehenden Ansprüche, wobei der Analyseschritt ferner den Schritt zum Erzeugen von Filterregeln zum Filtern von Datenpaketen, die mit einem möglichen Angriff in Beziehung stehen, und zum Filtern des Datenverkehrs basierend auf den Filterregeln aufweist.

5. Verfahren nach Anspruch 4, wobei der Schritt zum Erzeugen von Filterregeln den Schritt zum Erhalten eines oder mehrerer Attribute aufweist, die die Pakete charakterisieren, die mit einem möglichen Angriff in Beziehung stehen.

6. Verfahren nach Anspruch 4 oder 5, ferner mit den Schritten zum Erzeugen eines weiteren Datenvektors, Vergleichen des weiteren Datenvektors mit dem Datenvektor und Bestimmen des Vorliegens eines Angriffs basierend auf dem Vergleich.

7. Verfahren nach Anspruch 6, wobei der Schritt zum Bestimmen des Vorliegens eines Angriffs das Vorliegen eines Angriffs bestimmt, wenn sich der weitere Datenvektor vom Datenvektor dadurch unterscheidet, dass Attribute, die mit einem möglichen Angriff in Beziehung stehen, im weiteren Datenvektor nicht vorhanden sind.

8. Verfahren nach einem der vorangehenden Ansprüche, ferner mit dem Schritt zum Übertragen von Attributen, die mit Angriffspaketen in Beziehung stehen, an eine Blockiereinrichtung, vorzugsweise an eine programmierbare Firewall.

9. System zum Erkennen von Angriffen auf ein Computersystem über ein Netzwerk, mit dem das Computersystem verbunden ist, wobei das System aufweist:
eine Einrichtung zum Überwachen des Datenverkehrs zum Computersystem und zum Erzeugen eines oder mehrerer Angriffsindikatoren, die einen möglichen Angriff anzeigen, zum Erzeugen eines Datenvektors vom Datenverkehr zum Computersystem, wobei der Datenvektor Anomalien im Datenverkehr anzeigt und statistische Daten aufweist, und zum Erzeugen mindestens eines Vertrauensvektors durch eine entsprechende Experteneinrichtung, wobei der Vertrauensvektor die Wahrscheinlichkeit für jeden bekannten Angriff anzeigt, wobei der Vertrauensvektor basierend auf dem Datenvektor erzeugt wird;
eine Einrichtung zum Analysieren des Datenverkehrs basierend auf dem einen oder den mehreren Angriffsindikatoren und zum Bestimmen des Vorliegens eines Angriffs und ferner zum Identifizieren von Datenpaketen in dem Datenverkehr, die mit einem möglichen Angriff in Beziehung stehen;
eine Einrichtung zum Modifizieren der Erzeugung des einen oder der mehreren Angriffsindikatoren basierend auf dem Ergebnis der Analyse zum Verbessern der Zuverlässigkeit des einen oder der mehreren Angriffsindikatoren;
eine Einrichtung zum Bestimmen, dass der mögliche Angriff kein Angriff ist, wenn weniger als eine vorgegebene Menge des analysierten Datenverkehrs Datenpakete sind, die mit einem möglichen Angriff in Beziehung stehen, wobei die vorgegebene Menge im Bereich von 50% liegt,
wobei die Attribute einer jeweiligen Experteneinrichtung im Falle eines bekannten Angriffs oder wenn kein Angriff vorliegt verändert werden, und wobei im Falle eines neuen Angriffs eine neue Experteneinrichtung erzeugt wird.

## Revendications

1. Procédé de reconnaissance d'attaques contre un système d'ordinateur sur un réseau auquel le système d'ordinateur est connecté, le procédé comprenant les étapes de :
(a) surveillance du trafic de données vers le système d'ordinateur et génération d'un ou de plusieurs indicateurs d'attaque, indiquant une attaque potentielle, dans lequel l'étape de surveillance comprend en outre l'étape de génération d'un vecteur de données à partir du trafic de données vers le système d'ordinateur, le vecteur de données étant indicatif d'anomalies dans le trafic de données et comprenant des données statistiques, dans lequel l'étape de surveillance comprend en outre l'étape de génération d'au moins un vecteur de confiance par un moyen expert respectif, le vecteur de confiance indiquant la probabilité de chaque attaque connue, et dans lequel le vecteur de confiance est généré d'après le vecteur de données ;
(b) analyse du trafic de données d'après lesdits un ou plusieurs indicateurs d'attaque et détermination de la présence d'une attaque, dans lequel l'étape d'analyse du trafic de données comprend en outre l'étape d'identification de paquets de données dans le trafic de données concernant une attaque potentielle ;
(c) modification de la génération des un ou plusieurs indicateurs d'attaque d'après l'issue de l'étape d'analyse afin d'améliorer la fiabilité des un ou plusieurs indicateurs d'attaque,
le procédé comprenant en outre l'étape de détermination que l'attaque potentielle n'est pas une attaque si moins d'une quantité prédéterminée du trafic de données analysé sont des paquets de données concernant une attaque potentielle, dans lequel la quantité prédéterminée est dans la plage de 50 % ;
dans lequel les attributs d'un moyen expert respectif sont variés en cas d'une attaque connue ou en cas d'absence d'attaque ; et dans lequel un nouveau moyen expert est généré dans le cas d'une nouvelle attaque.

2. Procédé selon la revendication 1, le moyen expert comprenant des attributs de paquets de données concernant une attaque potentielle.

3. Procédé selon la revendication 1 ou 2, dans lequel les un ou plusieurs indicateurs d'attaque concernent au moins l'une des anomalies dans le vecteur de données et au moins un vecteur de confiance.

4. Procédé selon l'une quelconque des revendications précédentes, dans lequel l'étape d'analyse comprend en outre l'étape de génération de règles de filtrage pour filtrer des paquets de données concernant une attaque potentielle et filtrer le trafic de données d'après lesdites règles de filtrage.

5. Procédé selon la revendication 4, dans lequel l'étape de génération de règles de filtrage comprend l'étape d'obtention d'un ou de plusieurs attributs caractérisant les paquets concernant une attaque potentielle.

6. Procédé selon la revendication 4 ou 5, comprenant en outre les étapes de génération d'un vecteur de données supplémentaire ; de comparaison du vecteur de données supplémentaire au vecteur de données ; et de détermination de la présence d'une attaque d'après ladite comparaison.

7. Procédé selon la revendication 6, dans lequel l'étape de détermination de la présence d'une attaque détermine la présence d'une attaque si le vecteur de données supplémentaire diffère du vecteur de données, en ce que des attributs concernant une attaque potentielle ne sont pas présents dans le vecteur de données supplémentaire.

8. Procédé selon l'une quelconque des revendications précédentes, comprenant en outre l'étape de transfert d'attributs concernant des paquets d'attaque à un moyen de blocage, de préférence un pare-feu programmable.

9. Système de reconnaissance d'attaques contre un système d'ordinateur sur un réseau auquel le système d'ordinateur est connecté, le système comprenant :
un moyen de surveillance du trafic de données vers le système d'ordinateur et de génération d'un ou de plusieurs indicateurs d'attaque, indiquant une attaque potentielle, de génération d'un vecteur de données à partir du trafic de données vers le système d'ordinateur, le vecteur de données étant indicatif d'anomalies dans le trafic de données et comprenant des données statistiques, et de génération d'au moins un vecteur de confiance par un moyen expert respectif, le vecteur de confiance indiquant la probabilité de chaque attaque connue, dans lequel le vecteur de confiance est généré d'après le vecteur de données ;
un moyen d'analyse du trafic de données d'après lesdits un ou plusieurs indicateurs d'attaque et de détermination de la présence d'une attaque, et en outre d'identification de paquets de données dans le trafic de données concernant une attaque potentielle ;
un moyen de modification de la génération des un ou plusieurs indicateurs d'attaque d'après l'issue de l'analyse afin d'améliorer la fiabilité des un ou plusieurs indicateurs d'attaque ;
un moyen de détermination que l'attaque potentielle n'est pas une attaque si moins d'une quantité prédéterminée du trafic de données analysé sont des paquets de données concernant une attaque potentielle, dans lequel la quantité prédéterminée est dans la plage de 50 % ;
dans lequel les attributs d'un moyen expert respectif sont variés en cas d'une attaque connue ou en cas d'absence d'attaque ; et dans lequel un nouveau moyen expert est généré dans le cas d'une nouvelle attaque.
